# EUROPÄISCHE PATENTSCHRIFT

(11) **EP 0 872 750 B1**
(45) Veröffentlichungstag und Bekanntmachung des Hinweises auf die Patenterteilung: **12.12.2001**
(21) Anmeldenummer: 98106834.9
(22) Anmeldetag: 15.04.1998
(51) Int. Cl.: G02B 6/44

(54) **Kabelmuffe mit einer Haltevorrichtung für Kassetten zur Ablage und Spleissung von Lichtwellenleitern**
Junction box with a holding device for cassettes for storing optical fibres and their splices
Boite de jonction avec un dispositif de retenue de cassettes pour le stockage de fibres optiques ainsi que leurs épissures

(30) Priorität: 15.04.1997 DE 19715711; 01.12.1997 DE 19753283
(43) Veröffentlichungstag der Anmeldung: 21.10.1998
(73) Patentinhaber: RXS Gesellschaft für Vermögensverwaltung mbH, 80333 München (DE)
(72) Erfinder: Stateczny, Michael, 58509 Lüdenscheid (DE); Fröhlich, Franz-Friedrich, 58091 Hagen (DE)
(74) Vertreter: Viering, Hans-Martin, Dipl.-Ing.

(56) Entgegenhaltungen:
- EP-A- 0 717 862
- US-A- 4 832 436
- US-A- 5 247 603
- US-A- 5 323 478
- US-A- 5 515 472

## Beschreibung

Die Erfindung betrifft eine Kabelmuffe mit einer Haltevorrichtung für Kassetten zur Ablage und Spleißung von Lichtwellenleitern, wobei jede Kassette einzeln zugänglich ist und wobei jede Kassette einzeln zugänglich ist und wobei weiter jede Kassette an einem Kassettenhalter in einem Rastmechanismus um eine entlang einer Längskante verlaufenden Schwenkachse klappbar angeordnet und in mindestens einer Position arretierbar ist, wobei die Lichtwellenleiter in einem Freiraum des Kassettenträgers zu den einzelnen Kassetten geführt sind.

Aus der Patentanmeldung WO 96/32660 ist eine Haubenmuffe aus einem Haubenkörper und einem Dichtkörper mit Kabeleinlässen und einer ringförmigen Dichtungsvorrichtung zwischen dem Haubenkörper und dem Dichtkörper bekannt, wobei der Dichtkörper eine Haltevorrichtung zur mechanischen Verbindung des Haubenkörpers mit dem Dichtkörper aufweist. Weiterhin ist dort ein Kassettenträger für Lichtwellenleiterkassetten bekannt, der im Innenraum der Haubenmuffe am Dichtkörper befestigt ist. Die einzelnen Kassetten sind in einer Blockformation parallel nebeneinander angeordnet und können entweder durch Verschieben oder durch Schwenkung um einen Drehpunkt zugänglich gemacht werden.

Aus US 5,323,478 ist eine Kassettenanordnung für Lichtwellenleiter bekannt, in der einzelne Kassetten um eine Längsachse schwenkbar sind, wobei Arretierungen als Rastelemente für die geschwenkten Kassetten vorgesehen sind. Die Achsansätze und Arretierungen befinden sich in der Mitte der Längsseite einer Kassette. Die Einführungen der Lichtwellenleiter sind an den Schmalseiten der Kassette angeordnet und auf der Kassette befinden sich Führungen für die eingeführten Lichtwellenleiter.

Aus US 5,247,603 ist eine Kassettenanordnung für Lichtwellenleiter bekannt, deren Kassetten ebenfalls um die Längsachse geschwenkt werden können. Die Kassetten besitzen angesetzte Achszapfen, mit denen sie in einem Kassettenträger eingesetzt sind. Außerdem sind Rastelemente vorgesehen, durch die die Kassetten in einer bestimmten Lage fixiert werden können.

Bei bisher eingesetzten Spleißsystemen mangelt es oft entweder an der Packungsdichte, die erforderlich ist, wenn bis zu 200 und mehr Fasern pro Verbindungs- oder Abzweigpunkt gespleißt werden m üssen, oder es muß von Anfang an eine Selektion der Faseraufteilung vorgenommen werden, die bei späteren Änderungen sich nicht oder nur sehr schwer ändern läßt. Bei unterschiedlichen Verkabelungskonzepten sind jedoch auch unterschiedliche Kassetten von nöten, die dann nicht mehr untereinander austauschbar sind. Die Verkabelung in der Muffe ist bisher eher kabelorientiert und kann zu unbeabsichtigten Störungen von Übertragungen in Fasern bei Schalt- und Wartungsarbeiten führen.

Aufgabe der Erfindung ist, die unterschiedlichsten Spleißsysteme der Glasfaserverbindungen auf der Strecke mit nur einer Kassettenausführung durchführen und spätere Änderungen problemlos ausführen zu können. Außerdem soll ein kundenorientiertes Fasermanagement geschaffen werden, das ein Optimum zwischen Spleißaufwand und Übertragungssicherheit ermöglicht. Die gestellte Aufgabe wird nun gemäß der Erfindung mit einer Kabelmuffe der eingangs erläuterten Art dadurch gelöst, daß die Schwenkachse aus zwei seitlich überstehenden Achszapfen gebildet ist, daß die Achszapfen Rastnocken aufweisen, daß der Rastmechanismus in Form einer federnden Rastleiste ausgebildet ist, die Rasterungen aufweist und in die die Rastnocken der Achszapfen einrastbar sind, wobei durch Druck auf die Rastleiste die Rasterungen entriegelbar sind, daß die Einführungen für Lichtwellenleiter auf eine Kassette jeweils an der in der Schwenkachse verlaufenden Längskante angeordnet sind, daß die Einführungsrichtung jeder Einführung schräg zur Schwenkachse und voneinander abweisend tangential zu kreisförmigen Führungsleisten für Lichtwellenleiter verlaufen, daß ein Reserveraum durch einen am Kassettenträger befestigten Schwenkrahmen gebildet ist, in den ungeschnittene Lichtwellenleiter und/oder Reserveadern abgelegt sind, und daß die Kassetten in der Endposition bzw. Ruheposition übereinanderliegend im 30°-Winkel in Bezug auf die Waagerechte nach Abwärts gerichtet angeordnet sind, und daß die in der Arbeitsstellung im 30°-Winkel nach Aufwärts gerichteten Kassetten gleichzeitig entriegelbar sind.

Vorteile an der erfindungsgemäßen Kabelmuffe mit einer Haltevorrichtung für Kassetten ergeben sich in erster Linie dadurch, daß die Anzahl der Kassetten sowie die Montagezeit für die Verlegung und Einführung der Lichtwellenleiter erheblich gesenkt werden können. Außerdem ist bei der Führung der Lichtwellenleiter keine Beeinträchtigung von Übertragungen in den Lichtwellenleitern, unter anderem auch bezüglich der gegenseitigen Beeinflussung, zu erwarten. Die Anordnungen gemäß der Erfindung können in einer Durchgangsmuffe, in einem Hauptverteiler oder auch in verschiedenen Verteilerkästen mit den gleichen Vorteilen eingesetzt werden.

Ein Hauptstück dieses Kassettensystems gemäß der Erfindung bildet eine speziell hierfür geeignete Kassette zur Aufnahme, Ablage sowie Spleißung der Lichtwellenleiter. In eine sollche Kassette lassen sich bis zu zwölf Fasern spleißen, wozu die entsprechenden Bündeladern in die Kassette eingeführt werden.

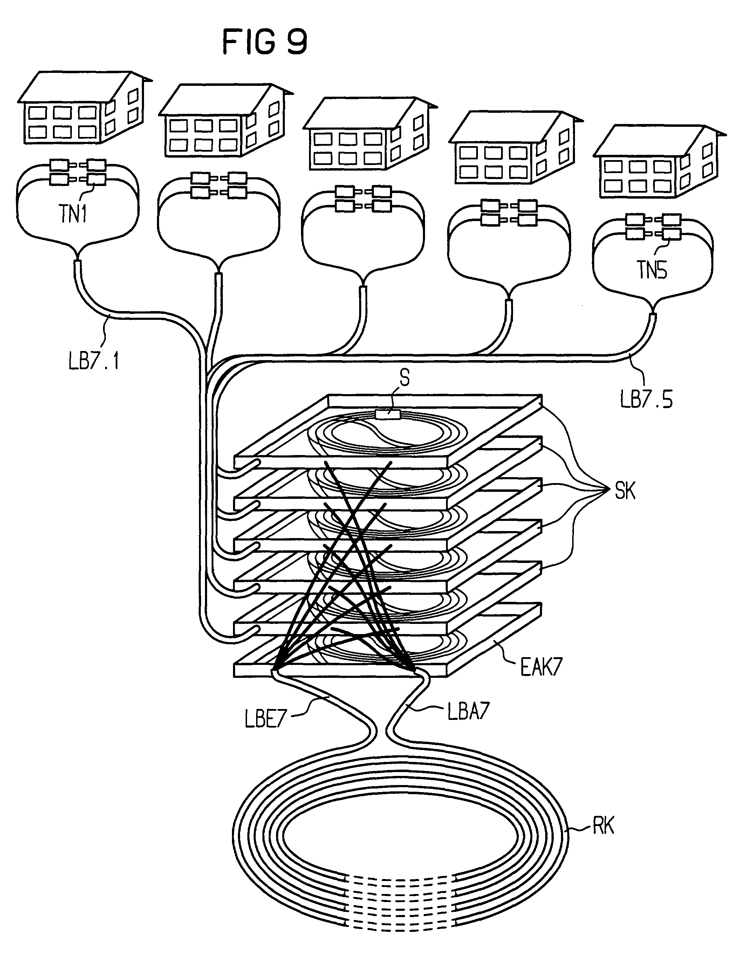

Dabei werden die Fasern durch entsprechende Niederhalter in der Kassette gehalten, so daß ein versehentliches Ausspringen einer Faser verhindert wird. Außerdem sind zwei kreisrunde Führungen vorgesehen, die gewährleisten, daß der minimale Biegeradius der Lichtwellenleiter nicht unterschritten wird. Außerdem besteht dadurch die Möglichkeit, daß Lichtwellenleiter sich in einer 8-Form kreuzen können, wodurch sich der Wickelsinn und damit auch die Ausgangsrichtung von Lichtwellenleitern ändern läßt. Dies dient beispielsweise der Zusammenfassung der Fasern in einer Bündelader von und zum Kunden wie es beispielsweise in Figur 9 dargestellt ist.

Weiterhin ergibt sich bei der erfindungsgemäßen Kassette die Möglichkeit, daß maximal 2 x 6 Bündeladern mit einem Durchmesser von 2 bis 2,4 mm und einer typischen Faserzahl von 2 oder 4 Fasern eingeführt werden können. Dies hat den Vorteil, daß eine Aufteilung von hochfaserigen Bündeladern wie zum Beispiel aus einem ankommenden Kabel auf niedrigfaserige Bündeladern wie zum Beispiel ein abgehendes Kabel durchgeführt werden kann. Dabei werden die Bündeladern direkt aus dem Kabel in die entsprechende Kassette geführt, wodurch sich eine kompaktere Spleißung und damit eine Senkung der Montagezeit erreichen läßt. Die Kassette gemäß der Erfindung weist entlang der Längskante, die in der Schwenkachse liegt, zumindest zwei Achszapfen auf, mit denen die Kassette schwenkbar in den Kassettenträger eingesetzt werden kann. Weiterhin ist auf jeder Kassette eine Klemmstelle für Reserveadern vorgesehen, die der Fixierung der Faserenden in der Kassette und zur leichteren Auffindung dient.

Der für die Halterung der Kassetten vorgesehene Kassettenträger kann vorzugsweise 39 der beschriebenen Kassetten aufnehmen und kann je nach Bedarf und den Platzverhältnissen des umgebenden Gehäuses verkürzt oder verlängert werden. Der Kassettenträger wird direkt mit dem Dichtkörper der jeweiligen Muffe verbunden und kann bei Bedarf vom Dichtkörper weggeschwenkt werden, um Montagefreiheit für spätere Nachbestückung von Kabeln zu gewährleisten. Der Kassettenträger besitzt außerdem einen Rastmechanismus, in den die Achsen bzw. Achszapfen der Kassetten eingeschnappt werden können. Da die Achsen bzw. Achszapfen Rastnocken aufweisen, die in entsprechende Rasterungen des Rastmechanismus eingreifen, ist es möglich, die Kassetten in mindestens einer Lage so zu positionieren, daß gute Zugänglichkeit für jeweils eine Kassette gegeben ist. Vorzugsweise besteht der Rastmechanismus aus einer federnden Rastleiste, die bei seitlich ausgeübtem Druck die Rasterungen freigibt, so daß die Ausgangsstellung bzw. Lagerstellung der Kassetten wieder herbeigeführt werden kann. Zweckmäßigerweise erfolgt die Lösung der Rasterung über alle Kassetten hinweg, so daß bei der Entriegelung sämtliche Kassetten in ihre Lagerstellung zurückfallen.

Am Rückteil des Kassettenblockes befindet sich im Bereich des Kassettenträgers ein Reserveraum, in den Reserveadern oder ungeschnittene Bündeladern abgelegt werden können. Auch die Zuführung der Bündeladern zu den einzelnen Kassetten erfolgt über diesen Reserveraum hinweg auf der Rückseite des Kassettenblockes, wodurch große Übersichtlichkeit zu erreichen ist. Zum Schutz der Lichtwellenleiter-Bündeladern werden diese nach der Einführung der Lichtwellenleiter-Kabel in die Kabelmuffe in flexiblen Schutzröhrchen geführt, so daß die Verletzungsgefahr möglichst niedrig gehalten werden kann. Der Reserveraum mit einer Tiefe von etwa 30 mm wird durch einen am Kassettenträger befestigten Schwenkrahmen gebildet, und ist beweglich am Kassettenträger befestigt, so daß er nach hinten abgeschwenkt werden kann. Dadurch wird die Zugänglichkeit zum Adereinführungsbereich der Kassetten verbessert. Der Abstand von 30 bis 40 mm ist nötig, um die Bündeladern mit dem nötigen Biegeradius an die Kassetten heranführen zu können. Bestand dieser Erfindung ist auch ein Fasermanagement, dem unterschiedliche Verkabelungskonzepte zwischen den einzelnen Kassetten zugrunde liegen. Durch dieses Fasermanagement ist es möglich, ein variables und kundenorientiertes Verkabelungskonzept zur Verfügung zu stellen. So wird beispielsweise eine vom Haupt- oder Ringkabel kommende Bündelader direkt bis in eine Verteilerkassette geführt. Von hier aus werden die dem Teilnehmer zugewiesenen Fasern in Schutzhüllen zu den einzelnen Spleißkassetten aufgeteilt. Die Teilnehmerader kann dann je nach Faseranzahl direkt zum Teilnehmer aus der Spleißkassette herausgeführt oder in einzelnen Fasern über Schutztüllen in die Verteilerkassette zurückgeführt werden. Dort werden die Fasern dann zusammengefaßt und zum Teilnehmer geführt. Bei Führung von 4 oder mehr Fasern zu mehreren Teilnehmern erreicht man eine bessere Übersicht, wenn eine spezielle Kassette als Teilnehmerkassette eingesetzt wird. Dieses Fasermanagement wird im weiteren anhand von Figuren näher erläutert. Weiterhin ist Vorteil, daß ein einziger Typ von Kassetten sowohl als Eingangs-/Ausgangskassette, als Verbindungskassette oder als Teilnehmerspleißkassette benutzt werden kann. Im Falle der reinen Verbindung von zwei Bündeladern mit maximal 12 Fasern kann eine Kassette dieses Typs auch als normale Spleißkassette verwendet werden.

Die Erfindung wird nun anhand von neun Figuren näher erläutert.
- Figur 1: zeigt eine Kassette für Lichtwellenleiter für den Aufbau in der Kabelmuffe.
- Figur 2: zeigt die Anordnung einer Kassette am Kassettenträger.
- Figur 3: zeigt die schwenkbare Anordnung der Kassetten am Kassettenträger.
- Figur 4: zeigt die Anordnung des Kassettenträgers am Dichtkörper.
- Figur 5: zeigt ein Schaltschema für Zwei- Faser-Führungen zum Teilnehmer.
- Figur 6: zeigt ein weiteres Schaltschema für Zwei-Faser-Führungen zum Teilnehmer.
- Figur 7: zeigt ein Schaltschema für Vier-Faser-Führungen zum Teilnehmer.
- Figur 8: zeigt ein weiteres Schaltschema für Vier-Faser-Führungen zum Teilnehmer.
- Figur 9: zeigt ein Schaltschema für Mehr-Faser-Führungen zum Teilnehmer.
- Figur 10: zeigt eine modifizierte Kassette für Lichtwellenleiter für den Aufbau in der Kabelmuffe.
- Figur 11: zeigt die Anordnung der modifizierten Kassette in perspektivischer Ansicht.
- Figur 12: zeigt einen modifizierten Kassettenträger.

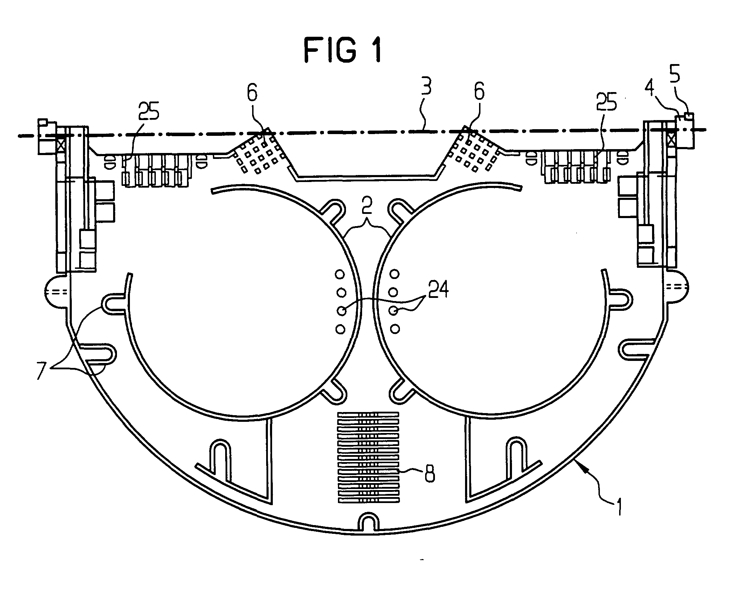

Die Figur 1 zeigt eine etwa halbkreisförmige Kassette 1 für Lichtwellenleiter gemäß der Erfindung, auf der mehrere Führungsleisten angeordnet sind, die an ihren oberen Enden Niederhalter 7 aufweisen, damit die eingeführten Lichtwellenleiter-Fasern nicht aus der Kassette 1 herausspringen. So sind zwei kreisförmige Führungsprofile bzw. Führungsleisten 2 zu erkennen, um die Lichtwellenleiter herum eingelegt werden können. Durch diese Führung ist es möglich, Lichtwellenleiter-Fasern zwischen den beiden kreisförmigen Führungsleisten zu kreuzen, so daß auch gegenläufige Führungen ermöglicht werden können. Die Einführungen 6 bzw. 25 sind so angeordnet, daß sie tangential zu den kreisförmigen Führungsleisten 2 verlaufen, so daß die weitere Führung ohne Gefährdung der Lichtwellenleiter-Fasern erfolgen kann. Weiterhin ist eine Spleißhalterung 8 vorgesehen, in der Lichtwellenleiter-Spleiße fixiert werden können. Entlang der Längskante der Kassette 1 verläuft die Schwenkachse 3, die zumindest aus zwei seitlich überstehenden Achszapfen 4 besteht, mit denen die Kassette 1 in den Halterungen des Kassettenträgers eingesetzt werden können. Die hier gezeigten Achszapfen 4 weisen Rastnocken 5 auf, mit denen eine Verrastung im Kassettenträger möglich ist. Weiterhin sind Stifte 24 vorgesehen, zwischen denen Reservefasern fixiert werden können. In den Einführungen 6 und 25 werden die Schutzhüllen bzw. Schutzröhrchen befestigt, in denen die Lichtwellenleiterfasern von der Aufteilungskassette in die Kunden- bzw. Teilnehmerkassette geführt werden.

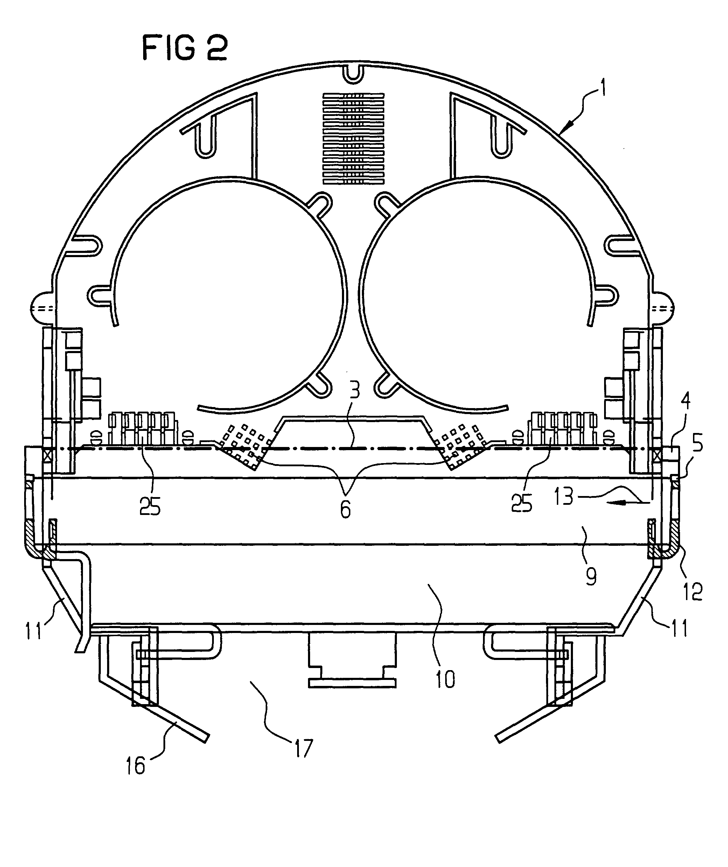

Figur 2 zeigt eine Kassette 1, die im Kassettenträger 9 mit ihren Achszapfen 4 im Rastmechanismus des Kassettenträgers 9 schwenkbar angeordnet ist. Der Kassettenträger 9 weist an beiden Seiten als Rastmechanismus zwei federnd gelagerte Rastleisten 12 auf, in deren Rasterungen (hier nicht sichtbar) die Rastnocken 5 arretierend eingreifen. Bei seitlichem Druck auf die Rastleiste wird die Verriegelung gelöst und die Kassette 1 kann in die entsprechende Ruhelage zurückklappen. Durch den Pfeil 13 ist angedeutet, in welche Richtung die Rastleiste gedrückt werden muß, um die Entriegelung zu betätigen. Weiterhin ist in dieser Ansicht von oben zu erkennen, daß an den Kassettenträger 9 Winkel 11 angesetzt sind, durch die der Freiraum 10 für die Faserführungen zwischen den einzelnen Kassetten bestimmt wird. Schließlich ist anschließend an diesen Freiraum 10 ein Schwenkrahmen 16 angesetzt, der einen Reserveraum 17 bildet für die Ablage bzw. Führung von Reserveadern oder ungeschnittenen Lichtwellenleiter-Adern.

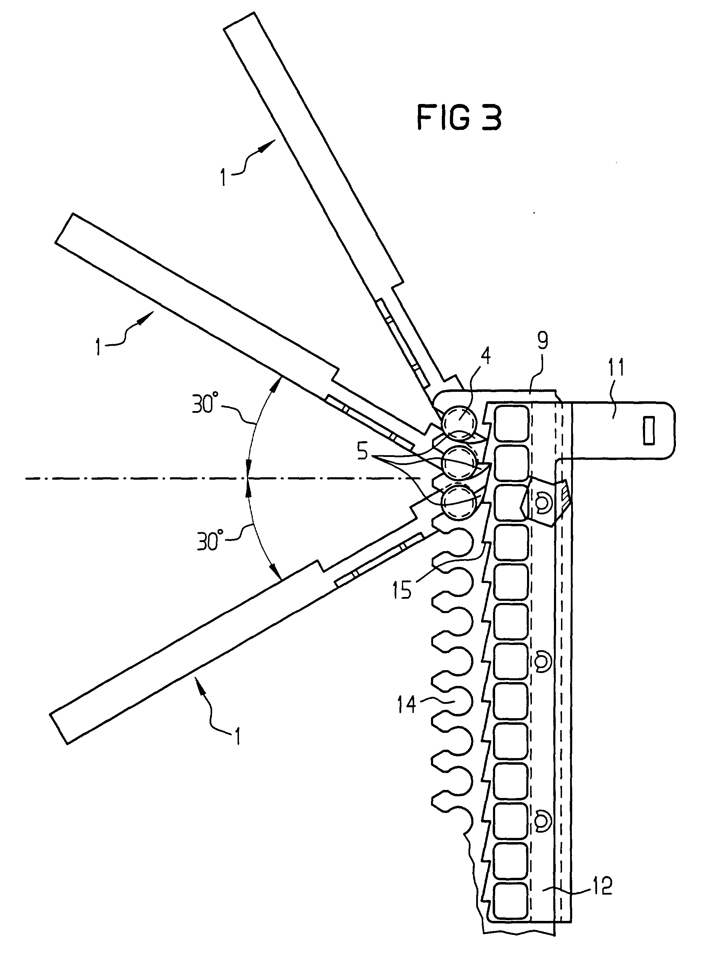

Figur 3 zeigt in einem Ausschnitt den Rastmechanismus mit seinen Rastleisten 12, die seitlich am Kassettenträger 9 federnd angeordnet sind. In dieser Seitenansicht ist erkennbar, daß am Kassettenträger 9 Rastaufnahmen 14 zur Aufnahme der Achszapfen 4 der Kassetten 1 übereinander angeordnet sind.

Die jeweils einzufügende Kassette 1 wird in der oben angegebenen Position in eine dieser Rastaufnahmen eingefügt und dann nach unten geklappt. Bei diesem Klappvorgang rasten nun die Rastnocken 5 in die sägezahnähnlichen Rasterungen 15 der Rastleiste 12 ein und halten dadurch die eingeführte Kassette 1 in einem Winkel, vorzugsweise 30° nach oben fest. Wenn nun die Rastleiste 12 in Richtung Kassettenträger 9 gedrückt wird, werden die Rastnocken 5 der Achszapfen 4 freigegeben und die Kassette 1 fällt nach unten in die Ruhelage, wo sie verharrt. Wenn nun der Zugang zu einer bestimmten Kassette 1 erwünscht wird, wird die Kassette bzw. werden die Kassetten über der ausgewählten Kassette nach oben geklappt und verharren in der oberen Rastlage. Dadurch ergibt sich ein doppelter Öffnungswinkel von vorzugsweise 60°, so daß diese Kassette für Montage oder Servicezwecke zugänglich ist. Am oberen Ende des Kassettenträgers 9 ist noch ein Winkel 11 zu erkennen, der den Schwenkrahmen 16 in einem bestimmten Abstand zum Kassettenblock hält. Der entstehende Freiraum wird für die Unterbringung der Schutzhüllen der Einzelfassern genutzt.

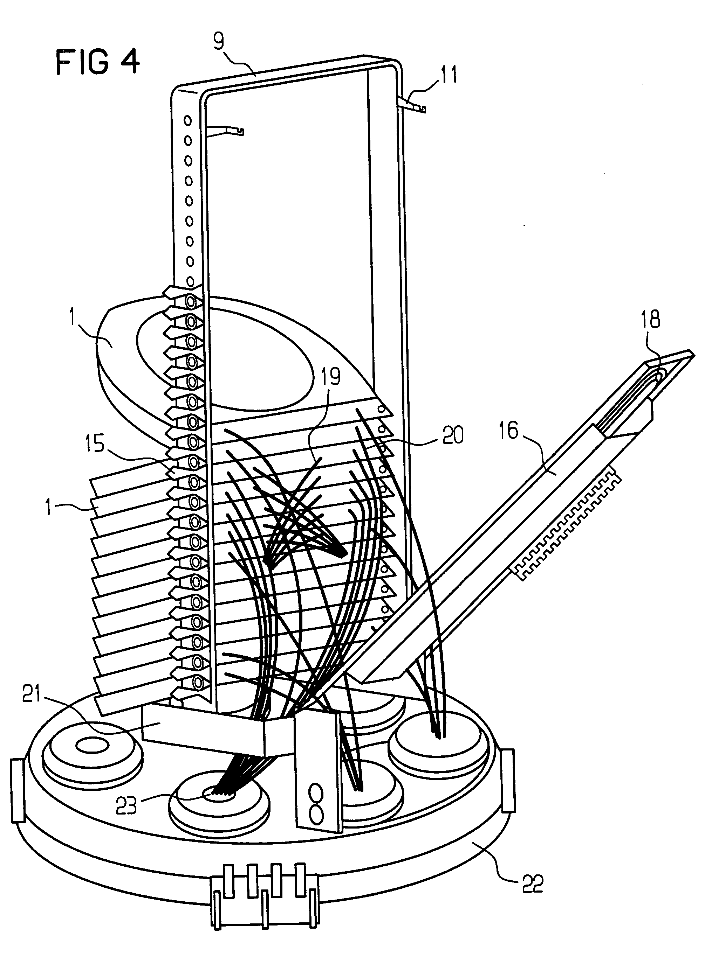

In der Figur 4 wird verdeutlicht, daß der Kassettenträger 9 mit seinen Winkeln 11, die gleichzeitig die Verriegelung für den Schwenkrahmen 16 bilden, am Dichtkörper 22 der Kabelmuffe mit einem Basiswinkel 21 vorzugsweise schwenkbar angeordnet ist. Die Darstellung ist so gewählt, daß die Kassetten 1 für die Lichtwellenleiter nach hinten gerichtet sind, wobei die oberste Kassette hochgeklappt ist, so daß die darunter liegende frei zugänglich ist. Seitlich sind die Rasterungen 15 des Rastmechanismus angedeutet. Ebenso angedeutet sind die Kabeleinführungen 23 im Dichtkörper 22 der Kabelmuffe. Die Bündeladern 20 werden von hier aus direkt auf die Kassetten 1 geführt, wo sie entsprechend abgelegt, verteilt, gespleißt und zurückgeführt werden. Die Führungen der Lichtwellenleiter-Bündeladern bzw. Schutzhüllen für Fasern 19 bzw. 20 zum Umsteigen bzw. Verteilen von einer Kassette zur anderen sind nur angedeutet. Diese Andeutung weist darauf hin, daß diese Verteilung in äußerst übersichtlicher Form im Freiraum des Kassettenträgers 9 hergestellt werden kann. Da der Schwenkrahmen 16, der für die Aufnahme von Reserveadern oder ungeschnittenen Adern vorgesehen ist, nach hinten abgeklappt werden kann, ist der Freiraum für die Adernführung zwischen dem Kassettenträger 9 gut zugänglich gemacht.

Zusammenfassend zu den Figuren 3 und 4 läßt sich der Funktionsablauf folgendermaßen beschreiben.

An dem Kassettenträger 9 befinden sich an beiden Seiten gegenüberliegend jeweils die bereits beschriebenen Rastleisten 12 des Rastmechanismus, die vorzugsweise aus einem Spritzgußteil aus Kunststoff bestehen. Dabei besteht der Rastmechanismus aus einem fest am Kassettenträger 9 angebrachten Teil mit einem nicht gezeigten Federelement und Rasterungen 15. Mit diesen Raststleisten 12 erfolgt die Halterung bzw. Fixierung der Kassetten 1 in aufgeklappter Position, vorzugsweise in einer 30°-Position von der Waagrechten nach aufwärts. Dadurch sind Montagearbeiten an den Fasern in der darunter liegenden Kassette gewährleistet, wie bereits beschrieben ist. Ist der Arbeitsvorgang beendet, können die darüber liegenden Kassetten gleichzeitig entrastet werden. Sie fallen in den abgeklappten Zustand in ihre Endposition bzw. Ruheposition. Sie liegen dabei unter einem Winkel von 30° in Bezug auf die Waagrechte nach unten übereinander. In diesem Zustand wird die Muffe verschlossen. Bei Bedarf können die einzelnen Kassetten nach Öffnung der Kabelmuffe für Servicearbeiten aus ihrer Ruhelage wiederum um 60° nach oben hochgeklappt werden, wobei die bereits beschriebene Einrastung der Rastnocken in den Rasterungen 15 erfolgt. Bei der Ausbildung der Rastnocken ist es zweckmäßig, diese mit einer Schräge zu versehen, so daß die Rasterungen 15 der Raststleisten 12 zunächst an dieser Schräge entlanggleiten bis die Rastnocken die Schräge verlassen. Danach federt die Rastleiste zurück, überschneidet den Rastnocken und hält schließlich die Kassette wiederum in der nach oben gerichteten 30°-Position. Diese Arretierung ist vorzugsweise beidseitig am Kassettenträger 9 angebracht. Der Vorgang ist beliebig wiederholbar.

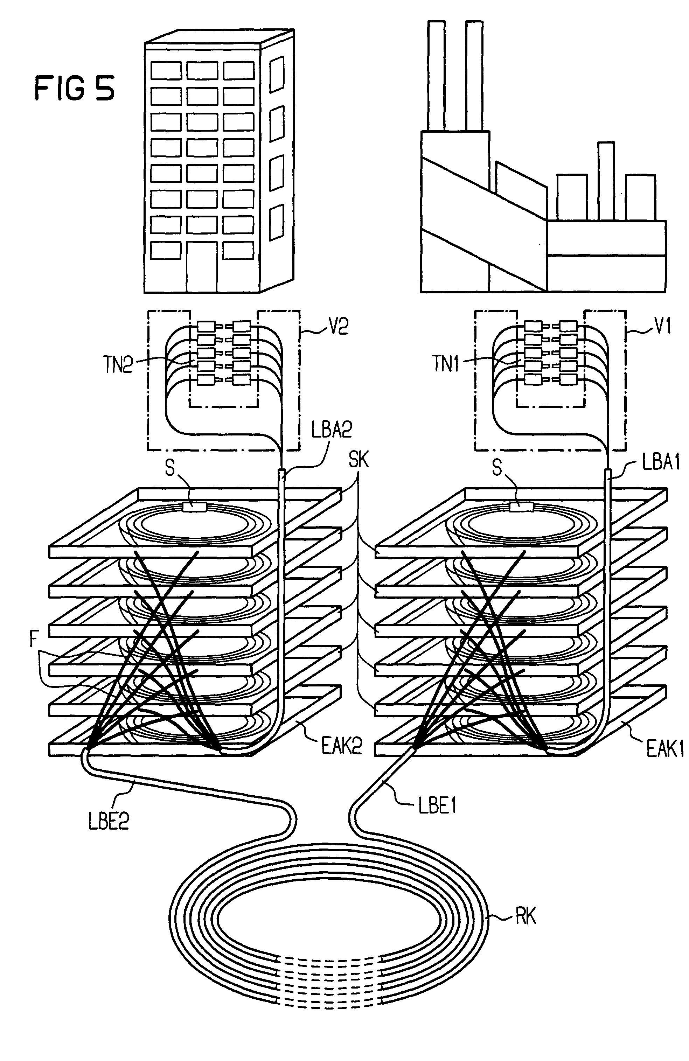

In Figur 5 ist ein Schaltschema für eine Zwei-Faser-Führung zum Teilnehmer skizziert. Eine ankommende Lichtwellenleiter-Bündelader LBE1 bzw. LBE2 aus dem Ringkabel RK wird mit je zwei Fasern auf einer Eingangs-/Ausgangskassette heraus auf Spleißkassetten SK aufgeteilt, gespleißt und danach wieder zusammengefaßt in einer Ader LBA2 über eine weitere Aufteilung V2, zum Beispiel eine Muffe, einem Endverzweiger, einem Hausanschlußkasten für mehrere Wohnungen oder Teilnehmer usw. zum Teilnehmer TN1 bzw. TN2 geführt. Ein solches Schaltschema kann auch für die Spleißung von Ringkabelader auf Ringkabelader erfolgen, wenn an dieser Stelle später noch Teilnehmer angeschlossen werden sollen. Bei der skizzierten Darstellung handelt es sich beispielsweise um 5 x 2 Fasern zu einem Teilnehmer, wobei eine Ader 10 Fasern enthält. Daraus folgert, daß von einer Eingangs-/Ausgangskassette EAK1 bzw. EAK2 eine Verteilung zu jeweils fünf Spleißkassetten SK erfolgt. Die oberhalb angegebene Häusersymbolik deutet an, welche Art von Teilnehmer für eine derartige Aufteilung günstig sind.

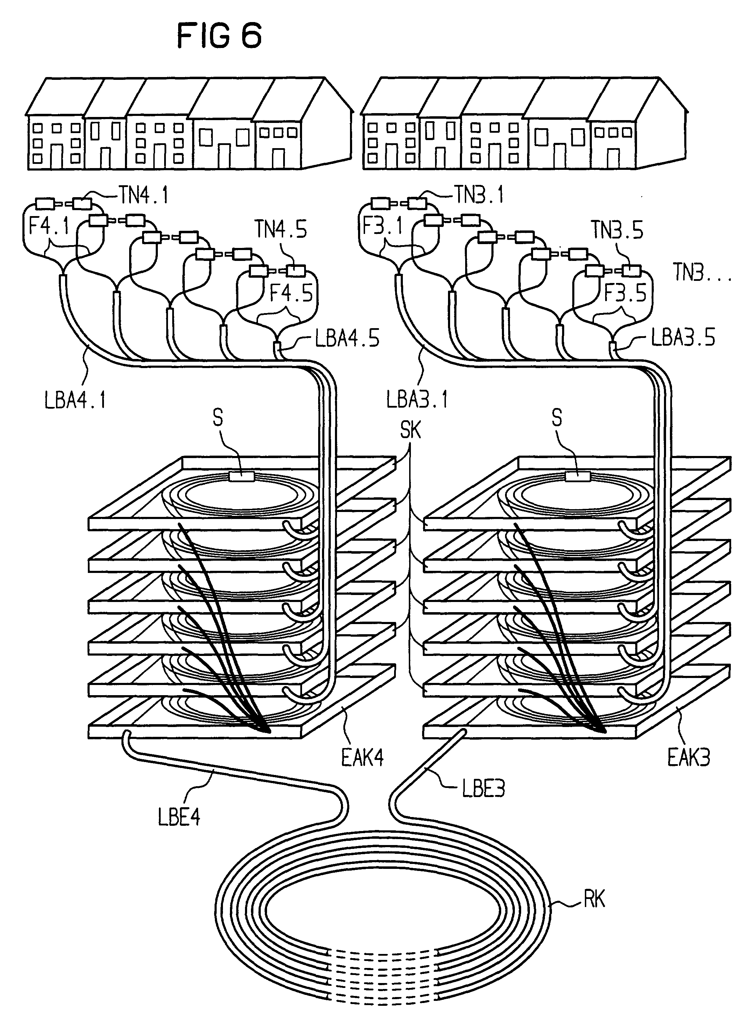

Figur 6 zeigt ein weiteres Schaltthema für eine Zwei-Faser-Führung zum Teilnehmer. Hier werden beispielsweise je zwei Fasern in fünf Adern zu fünf Teilnehmern TN3.1 bis TN3.5 bzw. TN4.1 bis TN4.5 geführt. Für jeden Teilnehmer werden jeweils zwei Fasern F3.1 bis F3.5 bzw. F4.1 bis F4.5 geführt. Diese beiden Fasern pro Teilnehmer werden aus den einzelnen Spleißkassetten SK in einzelnen Lichtwellenleiter-Bündeln LBA3.1 bis LBA3.5 bzw. LBA4.1 bis LBA4.5 abgeführt. Dabei wird jeweils eine ankommende Lichtwellenleiter-Bündelader LB3 bzw. LB4 mit je zehn Fasern aus dem Ringkabel RK zunächst auf jeweils eine Eingangs-/Ausgangskassette EAK3 bzw. EAK4 eingelegt. Die Verteilung erfolgt über die Faserbündel F, die von einer Schutzhülle umgeben sind, von der Eingangs/Ausgangskassette EAK3 bzw. EAK4 auf jeweils fünf Spleißkassetten SK mit je zwei Fasern. Die darüber skizzierte Häusersymbolik verdeutlicht, daß eine derartige Aufteilung für Teilnehmer einzelner Häuser geeignet ist.

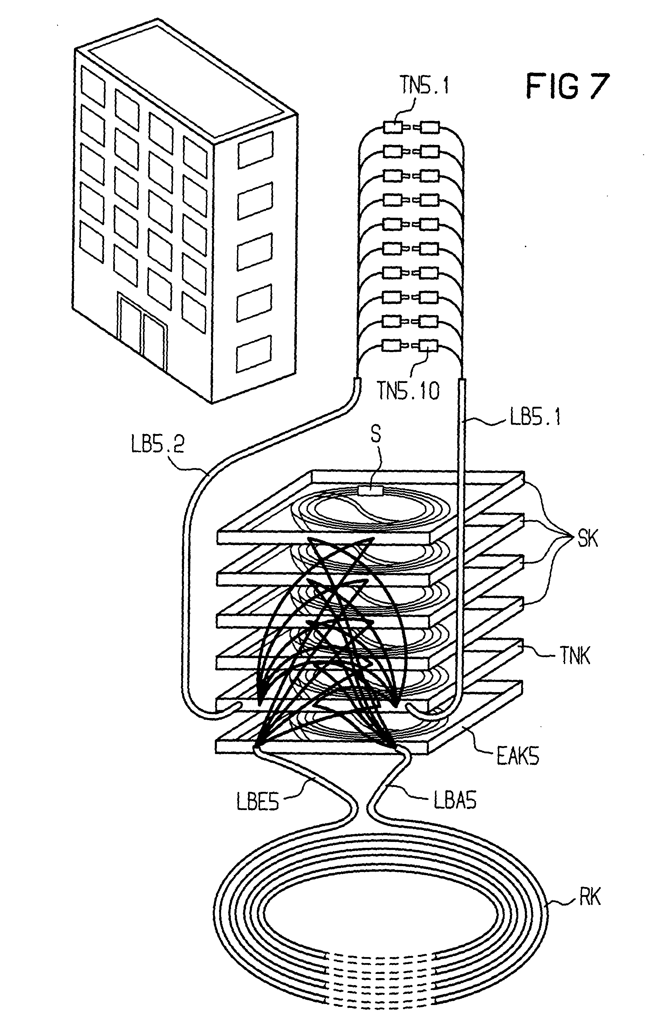

Die Figur 7 zeigt ein Schaltschema für eine Vier-Faser-Führung zum Teilnehmer. Je eine ankommende Lichtwellenleiter-Bündelader LBE5 bzw. LBA5 aus beiden Seiten des Ringkabels RK wird mit je zwei Fasern nach der Einführung in eine Eingangs/Ausgangskassette EAK5 mit je zwei Fasern auf Spleißkassetten SK5 aufgeteilt, gespleißt und danach zusammengefaßt auf einer Teilnehmerkassette TNK. Hierdurch wird die Übersichtlichkeit gewahrt, da von hier aus die einzelnen Fasern in zwei Lichtwellenleiter-Bündeln LB5.1 bzw. LB5.2 zu den Teilnehmern TN5.1 bis TN5.10 geführt werden. Hier werden 5 x 4 Fasern zu einem Teilnehmer geführt, wobei in zwei Adern jeweils zehn Fasern enthalten sind. Dieses Schema kann auch wie bei der Anordnung nach Figur 5 zum Spleißen von Ringader zum Teilnehmer oder von Ringader auf Ringader verwendet werden. Die Häusersymbolik deutet an, daß sich dieses Schaltschema besonders für den Anschluß von Teilnehmern innerhalb eines Gebäudes eignet.

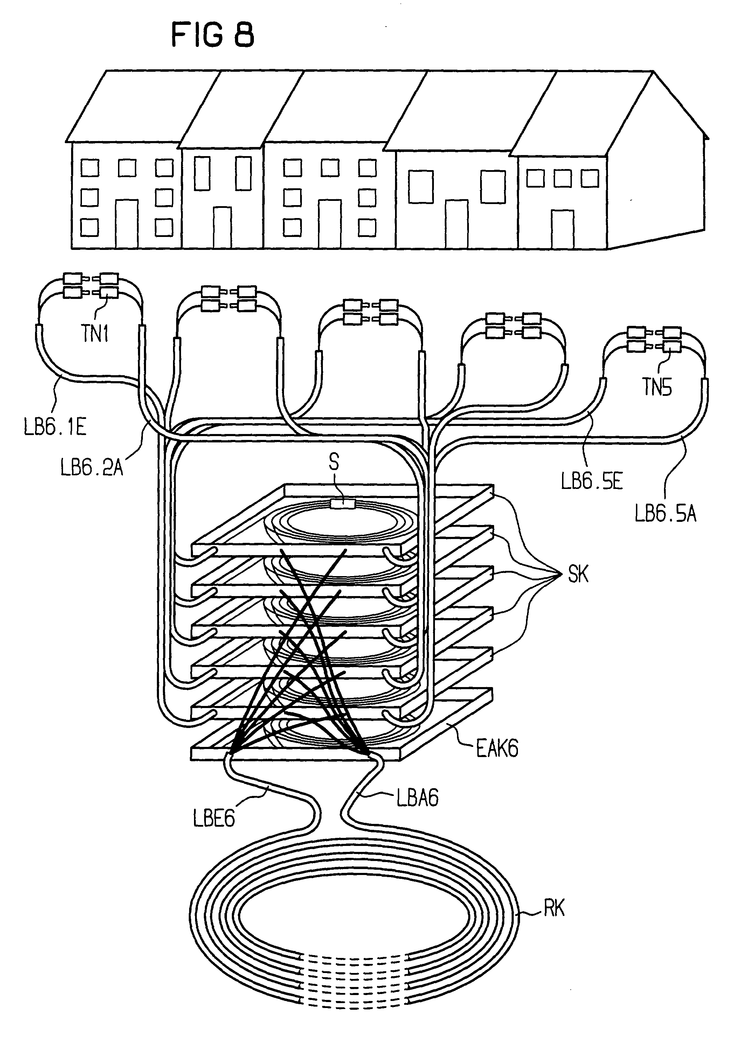

Figur 8 zeigt ein weiteres Schaltschema für eine Vier-Faser-Führung zum Teilnehmer, wobei hier je eine ankommende Lichtwellenleiter-Bündelader LBE6 bzw. LBA6 aus beiden Seiten des Ringkabels RK mit je zwei Fasern auf Spleißkassetten SK aufgeteilt, gespleißt und danach von jeder Spleißkassette SK mit je zwei Lichtwellenleiter-Bündeladern LB6.1E und LB6.2A bis LB6.5E bzw. LB6.5A zu den Teilnehmern TN1 bis TN5 geführt werden. Hiermit lassen sich jeweils je zwei Fasern zu fünf Teilnehmern führen in jeweils 2 x 5 Adern mit je zwei Fasern. Die Häusersymbolik kennzeichnet den Anwendungsbereich.

In Figur 9 ist schließlich ein Schaltschema für eine Mehr-Faser-Führung zum Teilnehmer angedeutet. Je zwei Fasern aus den ankommenden Lichtwellenleiter-Bündeladern LBE7 und LBA7 des Ringkabels RK werden nach der Einführung auf eine Eingangs/Ausgangskassette EAK7 auf Spleißkassetten SK aufgeteilt, gespleißt und in je einer Ader LB7.1 bis LB7.5 zu den Teilnehmern TN1 bis TN5 weitergeführt. Dabei können auch Reservefasern in der Kassette abgelegt werden.

Die in den Figuren 5 bis 9 skizzierten Schaltschemen für Faserführungen zum Teilnehmer lassen erkennen, daß eine Anordnung von Spleißkassetten gemäß der Erfindung eine Vielzahl von Verteilungsmöglichkeiten zuläßt, ohne daß prinzipielle Typenänderungen nötig sind. Dabei ergibt sich bei der optimalen Packungsdichte eine übersichtliche Aufteilung. Ferner ergibt sich eine große Einsparung an Montagearbeit, da sowohl die Spleißkassetten als auch die Verteilung der Lichtwellenleiter-Fasern auf der Rückseite der Kassettenanordnung einfach zu handhaben sind.

Eine weitere Aufgabe der Erfindung ist, die unterschiedlichsten Spleißsysteme der Glasfaserverbindungen auf der Strecke mit nur einer Kassettenausführung durchführen und spätere Änderungen problemlos ausführen zu können, wobei diese Ausführung der Kabelmuffe nach den bisherigen Ansprüchen noch weiter als modifizierte Kabelmuffe verbessert werden soll. Diese gestellte Aufgabe wird nun gemäß der Erfindung mit einer Kabelmuffe der eingangs erläuterten Art dadurch gelöst,daß jede Kassette einzeln oder in einem zusammengefaßten Block aus dem Kassettenträger entnehmbar ist.

Vorteile an der erfindungsgemäßen, modifizierten Kabelmuffe mit einer Haltevorrichtung für Kassetten ergeben sich in erster Linie auch dadurch, daß die Anzahl der Kassetten sowie die Montagezeit für die Verlegung und Einführung der Lichtwellenleiter erheblich gesenkt werden können. Außerdem ist bei der Führung der Lichtwellenleiter keine Beeinträchtigung von Übertragungen in den Lichtwellenleitern, unter anderem auch bezüglich der gegenseitigen Beeinflussung, zu erwarten. Die Anordnungen gemäß der Erfindung können in einer Durchgangsmuffe, in einem Hauptverteiler oder auch in verschiedenen Verteilerkästen mit den gleichen Vorteilen eingesetzt werden.

Ein Hauptstück dieses Kassettensystems gemäß der Erfindung bildet wiederum eine speziell hierfür geeignete,jedoch modifizierte Kassette zur Aufnahme, Ablage sowie Spleißung der Lichtwellenleiter. In eine solche Kassette lassen sich bis zu zwölf Fasern spleißen, wozu die entsprechenden Bündeladern in die Kassette eingeführt werden. Dabei werden die Fasern durch entsprechende Niederhalter in der Kassette gehalten, so daß ein versehentliches Ausspringen einer Faser verhindert wird.Diese Niederhalter sind gemäß der vorliegenden Erfindung an den Enden nach unten gebogen. Außerdem sind hier zwei gebogene Führungen vorgesehen, die gewährleisten, daß der minimale Biegeradius der Lichtwellenleiter nicht unterschritten wird. Außerdem besteht auch hier die Möglichkeit, daß Lichtwellenleiter sich in einer 8-Form kreuzen können, wodurch sich der Wickelsinn und damit auch die Ausgangsrichtung von Lichtwellenleitern ändern läßt. Dies dient beispielsweise der Zusammenfassung der Fasern in einer Bündelader von und zum Kunden.

Weiterhin ist auf jeder Kassette eine Klemmstelle für Reservefasern vorgesehen, die der Fixierung nicht benutzter Faserenden in der Kassette und zur leichteren Auffindung dient.Die modifizierte Kassette hat auch zwei Steckplätze für einen Schutzhüllenverbund,durch den einzelne Fasern in andere Kassetten aufgeteilt werden können.

Der für die Halterung der Kassetten vorgesehene Kassettenträger kann auch hier vorzugsweise 39 der beschriebenen Kassetten aufnehmen und kann je nach Bedarf und den Platzverhältnissen des umgebenden Gehäuses verkürzt oder verlängert werden. Der Kassettenträger wird direkt mit dem Dichtkörper der jeweiligen Muffe verbunden und kann bei Bedarf vom Dichtkörper weggeschwenkt werden, um Montagefreiheit für spätere Nachbestückung von Kabeln zu gewährleisten. Der Kassettenträger besitzt wiederum einen Rastmechanismus, in den die Achsen bzw. Achszapfen der Kassetten eingesetzt und mit Arretierstiften verankert werden können. Da die Achsen bzw. Achszapfen Rastnocken aufweisen, die in entsprechende Rasterungen des Rastmechanismus eingreifen, ist es möglich, die Kassetten in mindestens einer Lage so zu positionieren, daß gute Zugänglichkeit für jeweils eine Kassette gegeben ist. Vorzugsweise besteht der Rastmechanismus aus einer federnden Rastleiste, die bei ausgeübtem Druck auf die Kassette in senkrechter Richtung die Rasterungen freigibt, so daß die Ausgangsstellung bzw. Lagerstellung der Kassetten wieder herbeigeführt werden kann. Zweckmäßigerweise erfolgt die Lösung der Rasterung über alle Kassetten hinweg, so daß bei der Entriegelung sämtliche Kassetten in ihre Lagerstellung zurückgedrückt werden können. Der Rastmechanismus kann im Zusammenhang mit den Kassetten, vornehmlich 7 oder 8 Stück, zu einer Einheit verbunden werden.Diese Möglichkeit ist für bestimmte Montagetechnologien wichtig, z.B. um die Kassetten auf dem Spleißgerät zum Spleißen der Fasern abzulegen. Am Rückteil des Kassettenblockes befindet sich im Bereich des Kassettenträgers bei der modifizierten Ausführung wie bei der ursprünglichen Form ein Reserveraum, in den Reserveadern oder ungeschnittene Bündeladern abgelegt werden können. Auch die Zuführung der Bündeladern zu den einzelnen Kassetten erfolgt über diesen Reserveraum hinweg auf der Rückseite des Kassettenblockes, wodurch große Übersichtlichkeit zu erreichen ist. Zum Schutz der Lichtwellenleiter-Bündeladern werden diese nach der Einführung der Lichtwellenleiter-Kabel in die Kabelmuffe in flexiblen Schutzröhrchen geführt, so daß die Verletzungsgefahr möglichst niedrig gehalten werden kann. Der Reserveraum mit einer Tiefe von etwa 30 mm wird durch einen am Kassettenträger befestigten Schwenkrahmen gebildet, und ist beweglich am Kassettenträger befestigt, so daß er nach hinten abgeschwenkt werden kann. Dadurch wird die Zugänglichkeit zum Adereinführungsbereich der Kassetten verbessert. Der Abstand von 30 bis 40 mm ist nötig, um die Bündeladern mit dem nötigen Biegeradius an die Kassetten heranführen zu können. Bestand dieser Erfindung ist auch ein Fasermanagement, dem unterschiedliche Verkabelungskonzepte zwischen den einzelnen Kassetten zugrunde liegen. Durch dieses Fasermanagement ist es möglich, ein variables und kundenorientiertes Verkabelungskonzept zur Verfügung zu stellen. So wird beispielsweise eine vom Haupt- oder Ringkabel kommende Bündelader direkt bis in eine Verteilerkassette geführt. Von hier aus werden die dem Teilnehmer zugewiesenen Fasern in Schutzhüllen zu den einzelnen Spleißkassetten aufgeteilt. Die Teilnehmerader kann dann je nach Faseranzahl direkt zum Teilnehmer aus der Spleißkassette herausgeführt oder in einzelnen Fasern über Schutztüllen in die Verteilerkassette zurückgeführt werden. Dort werden die Fasern dann zusammengefaßt und zum Teilnehmer geführt. Bei Führung von 4 oder mehr Fasern zu mehreren Teilnehmern erreicht man eine bessere Übersicht, wenn eine spezielle Kassette als Teilnehmerkassette eingesetzt wird. Dieses Fasermanagement wird im weiteren anhand von Figuren näher erläutert. Weiterhin ist Vorteil, daß ein einziger Typ von Kassetten sowohl als Eingangs-/Ausgangskassette, als Verbindungskassette oder als Teilnehmerspleißkassette benutzt werden kann. Im Falle der reinen Verbindung von zwei Bündeladern mit maximal 12 Fasern kann eine Kassette dieses Typs auch als normale Spleißkassette verwendet werden.

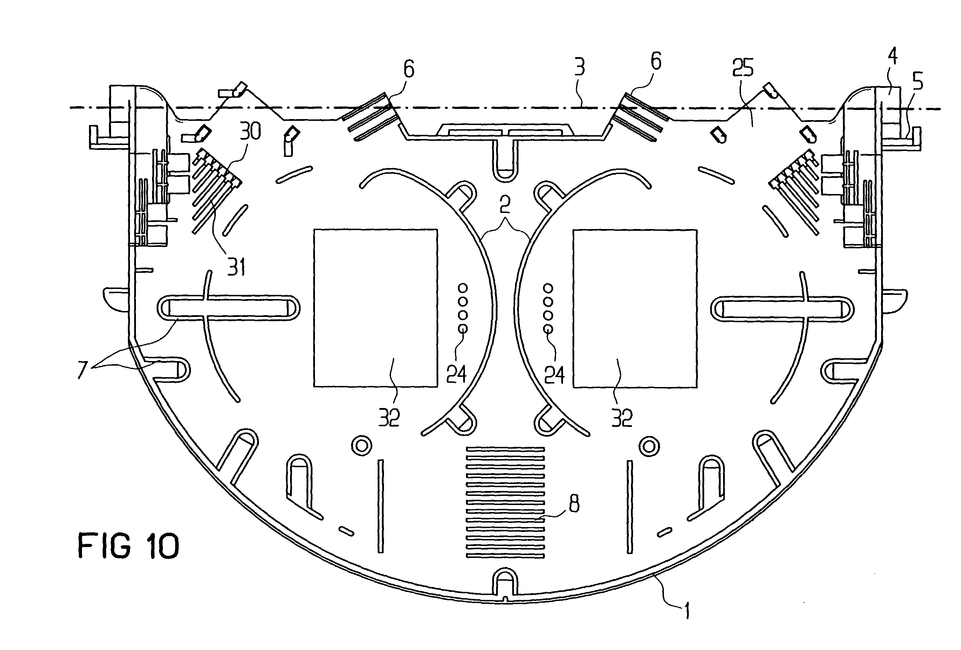

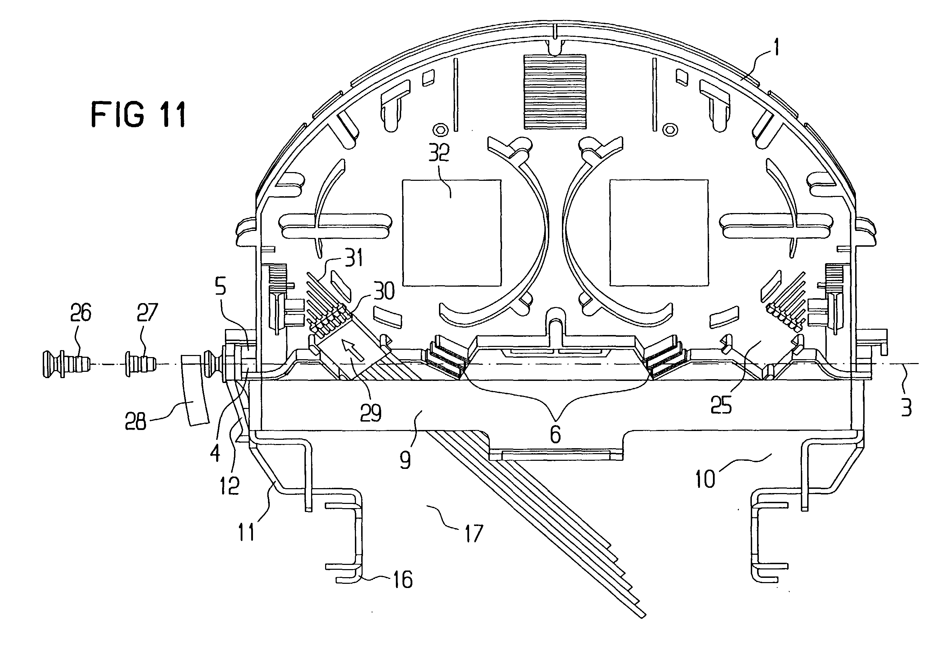

Die Figur 10 zeigt eine etwa halbkreisförmige Kassette 1 für Lichtwellenleiter gemäß der Erfindung, die gegenüber der ursprünglichen Ausführung modifiziert wurde.Es sind wiederum mehrere Führungsleisten angeordnet, die an ihren oberen Enden Niederhalter 7 aufweisen, damit die eingeführten Lichtwellenleiter-Fasern nicht aus der Kassette 1 herausspringen. So sind die ursprünglich kreisförmigen Führungsprofile bzw. Führungsleisten 2 zu erkennen, um die Lichtwellenleiter herum eingelegt werden können. Diese Führungsprofile bzw. Profilleisten sind leicht einwärts gebogen, so daß die Führung der Lichtwellenleiter-Fasern zwischen den beiden Führungsleisten erleichtert wird. Die Einführungen 6 bzw. 25 sind weiterhin so angeordnet, daß sie tangential zu den kreisförmigen Führungsleisten 2 verlaufen, so daß die weitere Führung ohne Gefährdung der Lichtwellenleiter-Fasern erfolgen kann. Weiterhin ist eine Spleißhalterung 8 vorgesehen, in der Lichtwellenleiter-Spleiße fixiert werden können. Entlang der Längskante der Kassette 1 verläuft die Schwenkachse 3, die zumindest aus zwei seitlich überstehenden Achszapfen 4 besteht, mit denen die Kassette 1 in den Halterungen des Kassettenträgers eingesetzt werden können. Mit Hilfe von Arretierstiften, die in die Löcher der Achszapfen 4 eingeklippt werden, wird die Kassette 1 im Kassettenträger befestigt. Die hier gezeigten Achszapfen 4 weisen Rastnocken 5 auf, mit denen eine Verrastung im Kassettenträger dahingehend möglich ist, daß die Kassetten in einer Lage von plus oder minus 30 Grad gehalten werden.Die Achszapfen 4 werden von Haltewinkeln abgeschlossen, die die Kassetten seitlich zusätzlich zu den Arretierstiften in den Raststreifen halten, wie in den weiteren Figuren gezeigt wird. Weiterhin sind Stifte 24 vorgesehen, zwischen denen Reservefasern fixiert werden können. In den Einführungen 6 und 25 werden die Schutzhüllen bzw. Schutzröhrchen befestigt, in denen die Lichtwellenleiterfasern von der Aufteilungskassette in die Kunden- bzw. Teilnehmerkassette geführt werden.Einführung 6 ist für Einzelschutzröhrchen, Einführung 25 ist für einen umspritzten Schutzhüllenverbund, der an dieser Stelle eingerastet wird,vorgesehen (siehe auch Figur 11 ).Die Enden der Schutzröhrchen stoßen mit ihren Öffnungen an einen Kamm 30 mit zu den Eingängen der Röhrchen weisenden abgeschrägten Kanten. Diese dienen im Zusammenhang mit Nuten 31 im Kassettenboden als Einführhilfe zum Einführen der Fasern. Inmitten der Führungsleisten 2 befindet sich je ein Beschriftungsfeld 32 für die Bezeichnung der abgelegten Spleiße in der Spleißhalterung 8.

Figur 11 zeigt die modifizierte Kassette 1 in perspektifischer Ansicht, die im Kassettenträger 9 mit ihren Achszapfen 4 im Rastmechanismus des Kassettenträgers 9 schwenkbar angeordnet ist. Der Kassettenträger 9 weist an beiden Seiten als Rastmechanismus zwei federnde Rastleisten 12 auf, in deren Rasterungen (hier nicht sichtbar) die Rastnocken 5 arretierend eingreifen. Zu sehen sind auch die Arretierstifte 26 und 27 , die je nach Bedarf lösbar (Ausführung 26) oder nicht lösbar (Ausführung 27) die Kassette in dem jeweiligen Raststreifen halten. Weiterhin ist in dieser Ansicht von oben zu erkennen, daß an den Kassettenträger 9 Winkel 11 angesetzt sind, durch die der Freiraum 10 für die Faserführungen zwischen den einzelnen Kassetten bestimmt wird. Schließlich ist anschließend an diesen Freiraum 10 ein Schwenkrahmen 16 angesetzt, der einen Reserveraum 17 bildet für die Ablage bzw. Führung von Reserveadern oder ungeschnittenen Lichtwellenleiter-Adern.Außerdem ist der Schutzhüllenverbund 29 skizziert, der in der Einführung 25 eingeführt und in den Kamm 30 eingeschoben ist.Weiterhin ist jede Kassette 1 mit einem Haltewinkel 28 versehen, der jeweils über die Raststreifen 12 des Kassetteträgers 9 greift, um eine feste Halterung der Kassetten 1 beim Herausnehmen des gesamten Kassettenblockes aus dem Kassettenträger 9 zu erreichen.

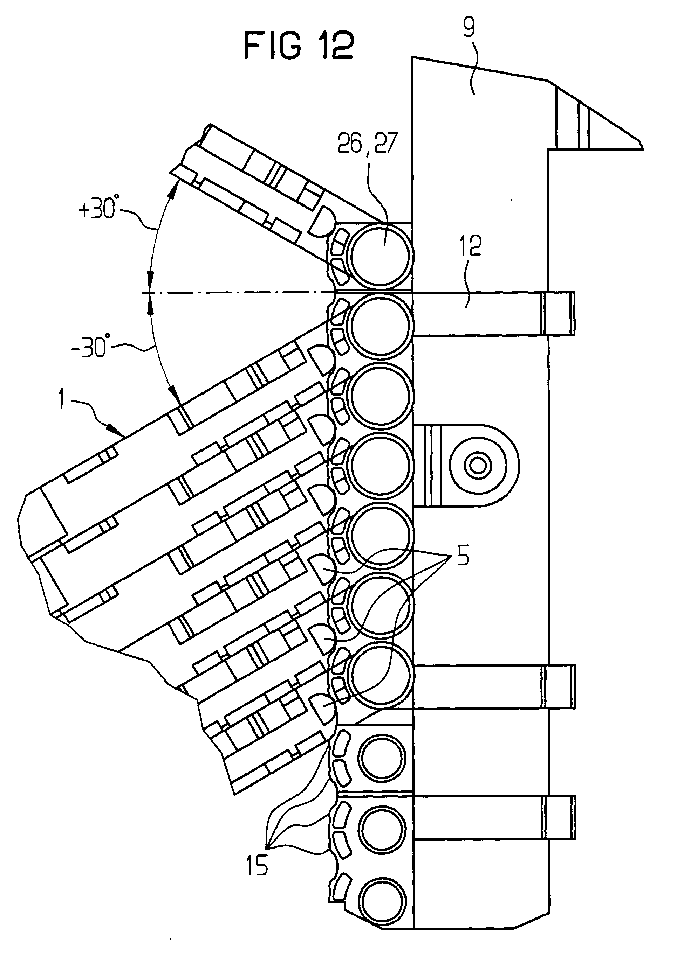

Figur 12 zeigt in einem Ausschnitt den Rastmechanismus mit seinen Rastleisten 12, die seitlich am Kassettenträger 9 federnd angeordnet sind. Diese Seitenansicht zeigt die gegenüber der ursprünglichen Form modifizierte Ausführung,wobei erkennbar ist, daß am Kassettenträger 9 die Kassetten 1 wiederum übereinander angeordnet sind. Die jeweils einzufügende Kassette 1 wird ungefähr waagrecht in die Raststreifen bis zum Anschlag eingeführt. Mit den Arretierstreifen 26 oder 27 wird die Kassette 1 jeweils schwenkbar zwischen den Raststreifen gehalten und kann von unten oder oben geklappt werden. Nach diesem Klappvorgang wird die Kassette 1 durch die Rastnocken 5 und die Rasterungen 15 auf dem Raststreifen in einem Winkel, vorzugsweise plus oder minus 30 Grad zur Waagrechten festgehalten.Wird nun eine Kraft auf den äußeren Kassettenrand senkrecht nach oben oder unten von Hand aufgebracht, so kann die Kassette jeweils in eine andere Position gebracht werden. Die Rastnocken 5 drücken dabei die Rasterung 15 in eine Aussparung, so daß der Weg für die Kassettenbewegung frei wird.Nach Übergleiten des Rastnocken 5 über die Rasterung 15 federt dieser wieder zurück und hält die Kassette in der jeweiligen Position. Wenn nun der Zugang zu einer bestimmten Kassette 1 erwünscht wird, wird die Kassette bzw. werden die Kassetten über der ausgewählten Kassette nach oben geklappt und verharren in der oberen Rastlage. Dadurch ergibt sich ein doppelter Öffnungswinkel von vorzugsweise 60°, so daß diese Kassette für Montage oder Servicezwecke zugänglich ist. Ist diese Kassette 1 mit lösbaren Arretierstiften 26 befestigt, so kann sie durch Lösen der Arretierstifte 26 aus dem Kassettenträger entnommen werden, was für bestimmte Montagetechnologien ein großer Vorteil ist, wie z.B. zur Ablage der Kassette auf dem Spleißgerät zum Spleißen der Fasern. Am oberen Ende des Kassettenträgers 9 ist noch ein Winkel 11 zu erkennen, der den Schwenkrahmen 16 in einem bestimmten Abstand zum Kassettenblock hält. Der entstehende Freiraum wird für die Unterbringung der Schutzhüllen der Einzelfassern genutzt.

Zusammenfassend ergibt sich der Funktionsablauf wie bereits beschrieben wurde bei der ursprünglichen Ausführung, wobei jedoch beim Übergleiten des Rastnocken 5 der Raststreifen wieder zurückfedert.

## Patentansprüche

1. Kabelmuffe mit einer Haltevorrichtung für Kassetten zur Ablage und Spleißung von Lichtwellenleitern, wobei jede Kassette einzeln zugänglich ist und wobei weiter jede Kassette an einem Kassettenhalter in einem Rastmechanismus um eine entlang einer Längskante verlaufenden Schwenkachse klappbar angeordnet und in mindestens einer Position arretierbar ist, wobei die Lichtwellenleiter in einem Freiraum des Kassettenträgers zu den einzelnen Kassetten geführt sind,
**dadurch gekennzeichnet,**
**daß** die Schwenkachse (3) aus zwei seitlich überstehenden Achszapfen (4) gebildet ist,
**daß** die Achszapfen (4) Rastnocken (5) aufweisen,
**daß** der Rastmechanismus in Form einer federnden Rastleiste (12) ausgebildet ist, die Rasterungen aufweist und in die die Rastnocken (5) der Achszapfen (4) einrastbar sind, wobei durch Druck auf die Rastleiste (12) die Rasterungen entriegelbar sind,
**daß** die Einführungen (6) für Lichtwellenleiter auf eine Kassette (1) jeweils an der in der Schwenkachse (3) verlaufenden Längskante angeordnet sind,
**daß** die Einführungsrichtung jeder Einführung (6) schräg zur Schwenkachse (3) und voneinander abweisend tangential zu kreisförmigen Führungsleisten (2) für Lichtwellenleiter verlaufen, und
**daß** ein Reserveraum (17) durch einen am Kassettenträger (9) befestigten Schwenkrahmen (16) gebildet ist, in den ungeschnittene Lichtwellenleiter und/oder Reserveadern abgelegt sind, und
**daß** die Kassetten (1) in der Endposition bzw. Ruheposition übereinanderliegend im 30°-Winkel in Bezug auf die Waagerechte nach Abwärts gerichtet angeordnet sind, und
**daß** die in der Arbeitsstellung im 30°-Winkel nach Aufwärts gerichteten Kassetten (1) gleichzeitig entriegelbar sind.

2. Kabelmuffe nach Anspruch 1,
**dadurch gekennzeichnet,**
**daß** eine Kassette als Eingangs-/Ausgangskassette (EAK1, EAK2) und mindestens eine Kassette als Spleißkassette (SK) angeordnet sind, daß eine aus einem Ringkabel (RK) ankommende Lichtwellenleiter-Bündelader (LBE), vorzugsweise bestehend aus zehn Fasern(F), auf die Eingangs-/Ausgangskassette (EAK1, EAK2) eingeführt und von hier bei einer Zwei-Faser-Führung mit je zwei Fasern (F) auf Spleißkassetten (SK), vorzugsweise auf fünf Spleißkassetten, aufgeteilt ist, und daß die Fasern (F) auf der jeweiligen Spleißkassette (SK) gespleißt und wieder zur Eingangs-/Ausgangskassette (EAK1, EAK2) zurückgeführt sind und von hier in einer abgehenden Lichtwellenleiter-Bündelader (LBA1, LBA2) zu einem weiteren Verteiler (V1, V2) und von hier zum Teilnehmer (TN1, TN2) geführt sind.

3. Kabelmuffe nach Anspruch 1,
**dadurch gekennzeichnet,**
**daß** eine Kassette als Eingangs-/Ausgangskassette (EAK3, EAK4) und mindestens eine Spleißkassette (SK) angeordnet sind, daß eine aus einem Ringkabel (RK) ankommende Lichtwellenleiter-Bündelader (LBE3, LBE4), vorzugsweise bestehend aus zehn Fasern (F), auf die Eingangs-/Ausgangskassette (EAK3, EAK4) eingeführt und von hier bei einer Zwei-Faser-Führung mit je zwei Fasern (F) auf Spleißkassetten (SK), vorzugsweise auf fünf Spleißkassetten, aufgeteilt ist, daß die Fasern (F) auf der jeweiligen Spleißkassette (SK) gespleißt und von hier direkt zu Teilnehmern (TN3.1 bis 3.5, TN4.1 bis 4.5) individuell geführt sind, vorzugsweise mit fünf Lichtwellenleiter Bündeladern (LBA3.1, LBA4.1 ...) zu je zwei Fasern (F3.1 bis F3.5, F4.1 bis F4.5).

4. Kabelmuffe nach Anspruch 1
**dadurch gekennzeichnet,**
**daß** eine Kassette als Eingangs-/Ausgangskassette (EAK5), eine Teilnehmerkassette (TNK) und mindestens eine Spleißkassette (SK) angeordnet sind, daß aus dem Ringkabel (RK) eine ankommende und eine abgehende Lichtwellenleiter-Bündelader (LBE5, LBA5), vorzugsweise bestehend aus je zehn Fasern (F) auf die Eingangs-/Ausgangskassette (EAK5) eingeführt, von hier auf Spleißkassetten (SK), vorzugsweise auf fünf Spleißkassetten, aufgeteilt sind, daß die Fasern (F) auf der jeweiligen Spleißkassette (SK) gespleißt und von hier auf eine Teilnehmerkassette (TNK) geführt und bei einer Vier-Faser-Führung zu zwei Lichtwellenleiter-Bündeladern (LB5.1, LB5.2), vorzugsweise zu je zehn Fasern, zusammengefaßt und von hier zu Teilnehmern (TN5.1 bis TN5.10) geführt sind.

5. Kabelmuffe nach Anspruch 1,
**dadurch gekennzeichnet,**
**daß** eine Kassette als Eingangs-/Ausgangskassette (EAK6) und mindestens eine Spleißkassette (SK) angeordnet sind, daß aus dem Ringkabel (RK) eine ankommende und eine abgehende Lichtwellenleiter-Bündelader (LBE6, LBA6), vorzugsweise bestehend aus je zehn Fasern, auf die Eingangs-/Ausgangskassette (EAK6) eingeführt und auf Spleißkassetten (SK), vorzugsweise fünf Spleißkassetten, aufgeteilt sind, wobei bei einer Vier-Faser-Führung von hier jeweils zwei Lichtwellenleiter-Bündeladern (LB6.1E bis LB6.5E, LB6.2A bis LB6.5A), vorzugsweise bestehend aus zwei Fasern je Lichtwellenleiter-Bündelader, zu den Teilnehmern (TN1 bis TN5) geführt sind.

6. Kabelmuffe nach Anspruch 1
**dadurch gekennzeichnet,**
**daß** eine Kassette als Eingangs-/Ausgangskassette (EAK7) und mindestens eine Spleißkassette (SK) angeordnet sind, daß auf die Eingangs-/Ausgangskassette (EAK7) eine ankommende und eine abgehende Lichtwellenleiter-Bündelader (LBE7, LBA7), vorzugsweise je zehn Fasern, eingeführt und von hier auf Spleißkassetten (SK) aufgeteilt sind, daß von den Spleißkassetten (SK) abgehend bei Mehrfach-Faser-Führung zu einem Teilnehmer Lichtwellenleiter-Bündeladern, vorzugsweise fünf Lichtwellenleiter-Bündeladern (LB7.1 bis LB7.5) mit je vier Fasern zu den Teilnehmern, vorzugsweise fünf Teilnehmern (TN1 bis TN5) geführt sind.

7. Kabelmuffe nach einem der vorhergehenden Ansprüche,
**dadurch gekennzeichnet,**
**daß** die Fasern und/oder Lichtwellenleiter-Bündeladern zwischen den einzelnen Kassetten in flexiblen Schutzhüllen oder Schutzröhrchen geführt sind.

8. Kabelmuffe nach einem der vorhergehenden Ansprüche,
**dadurch gekennzeichnet,**
**daß** jede Kassette (1) einzeln oder in einem zusammengefaßten Block aus dem Kassettenträger (9) entnehmbar ist.

9. Kabelmuffe nach Anspruch 8,
**dadurch gekennzeichnet,**
**daß** in die Kassette (1) ein Schutzhüllenverbund (29) eingesetzt ist.

10. Kabelmuffe nach Anspruch 9,
**dadurch gekennzeichnet,**
**daß** der Schutzhüllenverbund (29) gegen einen Kamm (30) stößt und daß anschließend daran im Kassettenboden Nuten (31) zur Führung von Fasern angeordnet sind.

11. Kabelmuffe nach einem der Ansprüche 8 bis 10,
**dadurch gekennzeichnet,**
**daß** Niederhalter (7) für Fasern auf der Kassette (1) angeordnet sind und daß die Niederhalter (7) an den Enden abwärts gebogen sind.

12. Kabelmuffe nach einem der Ansprüche 8 bis 11,
**dadurch gekennzeichnet,**
**daß** die Kassetten (1) mit den Raststreifen (12) als Verbund aus dem Kassettenträger (9) entnehmbar sind.

13. Kabelmuffe nach einem der Ansprüche 8 bis 12,
**dadurch gekennzeichnet,**
**daß** die Kassetten (1) mit Arretierstiften (26) lösbar zwischen den Raststreifen (12) befestigt sind.

14. Kabelmuffe nach einem der Ansprüche 8 bis 13,
**dadurch gekennzeichnet,**
**daß** die Kassetten (1) mit Arretierstiften (27) unlösbar verbunden sind.

15. Kabelmuffe nach einem der Ansprüche 8 bis 14,
**dadurch gekennzeichnet,**
**daß** die Kassette (1) mit einem Haltewinkel (28) versehen ist, der über den Raststreifen (12) greift und eine Halterung für die Kassette (1) beim Herausnehmen bildet.

## Claims

1. Cable sleeve with a holding apparatus for cassettes for storing and splicing light waveguides, wherein each cassette is individually accessible and wherein further each cassette is arranged at a cassette holder in a locking mechanism and is hinged around a pivot axle running along a longitudinal edge and can be locked in at least one position, wherein the light waveguides are guided to the individual cassettes in a free space of the cassette carrier,
**characterized in that**
the pivot axle (3) is formed of two laterally projecting axle pins (4),
that the axle pins (4) are provided with catch cams (5),
that the locking mechanism is formed as a resilient catch rail (12) provided with latches and into which the catch cams (5) of the axle pins (4) can be snapped, wherein by pressure onto the catch rail (12) the latches can be unlocked,
that the inlets (6) for light waveguides on a cassette (1) are respectively arranged at the longitudinal edge in the pivot axle (3),
that the inlet direction of each inlet (6) runs at an angle to the pivot axle (3) and, pointing away from one another, tangentially to circular guide rails (2) for light waveguides, and
that a reserve space (17) is formed by a pivoting frame (16) attached to the cassette carrier (9), in which uncut light waveguides and/or reserve leads are stored, and
that the cassettes (1) are arranged in the end position and, respectively, resting position, superimposed at a downward angle of 30° with respect to the horizontal line, and that the cassettes (1) directed in the operating position at an upward angle of 30° can be simultaneously unlocked.

2. Cable sleeve according to claim 1, **characterized in that** a cassette is arranged as input/output cassette (EAK1, EAK2) and at least one cassette as splicing cassette (SK), that a light waveguide bundle lead (LBE) arriving from a ring cable (RK), preferably consisting of ten fibres (F), is introduced to the input/output cassette (EAK1, EAK2) and from here, given a two-fibre guiding is partitioned with respectively two fibres (F) to splicing cassettes (SK), preferably five splicing cassettes, and that the fibres (F) are spliced on the respective splicing cassette (SK) and are guided back again to the input/output cassette (EAK1, EAK2), and from here are guided in an outgoing light waveguide bundle lead (LBA1, LBA2) to a further distributor (V1, V2) and from here to the subscriber (TN1, TN2).

3. Cable sleeve according to claim 1,
**characterized in that**
a cassette is arranged as input/output cassette (EAK3, EAK4) and that at least one splicing cassette (SK) is arranged, that a light waveguide bundle lead (LBE3, LBE4) coming in from a ring cable (RK), preferably consisting of ten fibres (F), is introduced to the input/output cassette (EAK3, EAK4) and from here given a two-fibre guiding is partitioned with respectively two fibres (F) to splicing cassettes (SK), preferably five splicing cassettes, that the fibres (F) are spliced on the respective splicing cassette (SK) and are directly guided from here individually to subscribers (TN3.1 to 3.5, TN4.1 to 4.5), preferably with five light waveguide bundle leads (LBA3.1, LBA4.1...) with respectively two fibres (F3.1 to F3.5, F4.1 to F4.5).

4. Cable sleeve according to claim 1,
**characterized in that**
a cassette is arranged as input/output cassette (EAK5), a subscriber cassette (TNK) and at least one splicing cassette (SK) are arranged, that from the ring cable (RK) one arriving and one outgoing light waveguide bundle lead (LBE5, LBA5), preferably consisting of respectively ten fibres (F) are guided to the input/output cassette (EAK5), from here to splicing cassettes (SK), preferably five splicing cassettes, that the fibres (F) are spliced on the respective splicing cassette (SK) and are guided from here to a subscriber cassette (TNK) and are collected given a four-fibre-guiding to two light waveguide bundle leads (LB5.1, LB5.2), preferably at ten fibres respectively, and are guided from here to subscribers (TN5.1 to TN5.10).

5. Cable sleeve according to claim 1,
**characterized in that**
a cassette is arranged as input/output cassette (EAK6) and at least one splicing cassette (SK) is arranged, that from the ring cable (RK) an arriving and an outgoing light waveguide bundle lead (LBE6, LBA6), preferably consisting of respectively ten fibres, are guided to the input/output cassette (EAK6) and are partitioned to splicing cassettes (SK), preferably five splicing cassettes, wherein given a four-fibre guiding from here respectively two light waveguide bundle leads (LB6.1E to LB6.5E, LB6.2A to LB6.5A), preferably consisting of two fibres per light waveguide bundle lead, are guided to the subscribers (TN1 to TN5).

6. Cable sleeve according to claim 1,
**characterized in that**
a cassette as input/output cassette (EAK7) and at least one splicing cassette (SK) are arranged, that to the input/output cassette (EAK7) an arriving and an outgoing light waveguide bundle lead (LBE7, LBA7), preferably at ten fibres each, are guided and from here are partitioned to splicing cassettes (SK), that outgoing from the splicing cassettes (SK) given multiple-fibre- guiding to a subscriber light waveguide bundle leads, preferably five light waveguide bundle leads (LB7.1 to LB7.5) with respectively four fibres are guided to the subscribers, preferably to five subscribers (TN1 to TN5).

7. Cable sleeve according to any of the preceding claims,
**characterized in that**
the fibres and/or light waveguide bundle leads are guided between the individual cassettes in flexible protective sheaths or protective tubes.

8. Cable sleeve according to any of the preceding claims,
**characterized in that**
each cassette (1) can be taken out of the cassette carrier (9) individually or in a collective block.

9. Cable sleeve according to claim 8,
**characterized in that**
a protective sheath connection (29) is inserted in the cassette (1).

10. Cable sleeve according to claim 9,
**characterized in that**
the protective sheath connection (29) abuts against a comb (30) and that connected thereto grooves (31) are arranged in the cassette base for guiding fibres.

11. Cable sleeve according to any of claims 8 to 10,
**characterized in that**
hold-down clamps (7) for fibres are arranged on the cassette (1) and that the hold-down clamps (7) are bent downwards at the ends.

12. Cable sleeve according to any of claims 8 to 11,
**characterized in that**
the cassettes (1) can be removed together with the catch rails (12) from the cassette carrier (9).

13. Cable sleeve according to any of claims 8 to 12,
**characterized in that**
the cassettes (1) are detachably attached by locking pins (26) between the catch rails (12).

14. Cable sleeve according to any of claims 8 to 13,
**characterized in that**
the cassettes (1) are connected in a non-detachable fashion by locking pins (27).

15. Cable sleeve according to any of claims 8 to 14,
**characterized in that**
the cassette (1) is provided with a fixing angle (28), which reaches beyond the catch rail (12) and which forms a holder for the cassette (1) during removal.

## Revendications

1. Manchon de câble avec un dispositif de retenue pour cassettes pour le stockage et l'épissure de fibres optiques, chaque cassette étant accessible individuellement et, de plus, chaque cassette étant arrangée à un dispositif de retenue pour cassettes dans un mécanisme d'encliquetage et pouvant être repliée autour d'un axe de pivotement s'étendant le long d'une arête longitudinale, et pouvant être arrêtée dans au moins une position, les fibres optiques étant guidées dans un espace libre du moyen de support de cassettes vers les cassettes respectives,
**caractérisé en ce que**
l'axe de pivotement (3) est formé de deux fusées d'essieu (4) en saillie latéralement,
que les fusées d'essieu (4) sont pourvues de cames d'encliquetage (5),
que le mécanisme d'encliquetage est en forme d'un listel d'encliquetage élastique (12) ayant des crans d'arrêt et dans lesquels les cames d'encliquetage (5) des fusées d'essieu peuvent s'enclencher, les crans d'arrêt pouvant être débloqués sous pression sur le listel d'encliquetage,
que les entrées (6) pour fibres optiques sur une cassette (1) sont arrangées respectivement à l'arête longitudinale s'étendant le long de l'axe de pivotement (3),
que la direction d'entrée de chaque entrée (6) est en biais par rapport à l'axe de pivotement (3) et, en direction opposée l'une à l'autre, tangentiellement aux barres conductrices circulaires (2) pour fibres optiques, et
qu'un espace de réserve (17) est formé par un châssis pivotant (16) attaché au moyen de support de cassettes (9), dans lequel des fibres optiques non-coupées et/ou des fils de câble de réserve sont déposés, et
que les cassettes (1) sont arrangées dans leur position finale et, respectivement, dans leur position de repos, l'une au-dessus de l'autre avec un angle de 30° vers le bas par rapport à la ligne horizontale, et que les cassettes (1) dirigées en haut avec un angle de 30° dans leur position d'opération peuvent être débloquées en même temps.

2. Manchon de câble selon la revendication 1,
**caractérisé en ce**
**qu'**une cassette est arrangée comme cassette d'entrée/de sortie (EAK1, EAK2) et au moins une cassette est arrangée comme cassette d'épissure (SK), qu'un faisceau de fils de fibres optiques (LBE) venant d'un câble de ceinture (RK), consistant de préférence de dix fibres (F), est guidé vers la cassette d'entrée/de sortie (EAK1, EAK2) et, à partir d'ici, avec un guidage à deux fibres, est réparti avec respectivement deux fibres (F) sur des cassettes d'épissure (SK), de préférence sur cinq cassettes d'épissure, et que les fibres (F) sur la cassette d'épissure (SK) respective sont épissées et reguidées vers la cassette d'entrée/de sortie (EAK1, EAK2), et à partir d'ici, sont guidées dans un faisceau de fils de fibres optiques sortant (LBA1, LBA2) vers un autre distributeur (V1, V2) et, de là, vers l'abonné (TN1, TN2).

3. Manchon de câble selon la revendication 1,
**caractérisé en ce**
**qu'**une cassette est arrangée comme cassette d'entrée/de sortie (EAK3, EAK4) et au moins une cassette d'épissure (SK) est arrangée, qu'un faisceau de fils de fibres optiques (LBE3, LBE4) venant d'un câble de ceinture (RK), consistant de préférence de dix fibres (F), est guidé vers la cassette d'entrée/de sortie (EAK3, EAK4), et, à partir d'ici, avec un guidage à deux fibres, est réparti avec deux fibres (F) respectivement sur des cassettes d'épissure (SK), de préférence cinq cassettes d'épissure, que les fibres (F) sont épissées sur la cassette d'épissure (SK) respective et, à partir d'ici, sont guidées individuellement et directement vers les abonnés (TN3.1 à 3.5, TN4.1 à 4.5), de préférence avec cinq faisceaux de fils de fibres optiques (LBA3.1, LBA4.1...) à deux fibres (F3.1 à F3.5, F4.1 à F4.5) respectivement.

4. Manchon de câble selon la revendication 1,
**caractérisé en ce**
**qu'**une cassette est arrangée comme cassette d'entrée/de sortie (EAK5), et une cassette d'abonné (TNK) et au moins une cassette d'épissure (SK) sont arrangées, qu'à partir du câble de ceinture (RK) un faisceau de fils de fibres optiques arrivant et un faisceau de fils de fibres optiques sortant (LBE5, LBA5), consistant de préférence de dix fibres (F) respectivement, sont guidés vers la cassette d'entrée/de sortie (EAK5), et sont, à partir d'ici, répartis sur des cassettes d'épissure (SK), de préférence cinq cassettes d'épissure, que les fibres (F) sont épissées sur la cassette d'épissure (SK) respective et, à partir d'ici, sont guidées vers une cassette d'abonné (TNK) et, avec un guidage à quatre fibres, sont combinées pour former deux faisceaux de fils de fibres optiques (LB5.1, LB5.2), de préférence à dix fibres respectivement, et sont guidées à partir d'ici vers des abonnés (TN5.1 à TN5.10).

5. Manchon de câble selon la revendication 1,
**caractérisé en ce**
**qu'**une cassette est arrangée comme cassette d'entrée/de sortie (EAK6) et au moins une cassette d'épissure (SK) est arrangée, qu'à partir du câble de ceinture (RK) un faisceau de fils de fibres optiques arrivant et un faisceau de fils de fibres optiques sortant (LBE6, LBA6), consistant de préférence de dix fibres respectivement, sont guidés vers la cassette d'entrée/de sortie (EAK6) et sont répartis sur des cassettes d'épissure (SK), de préférence cinq cassettes d'épissure, deux faisceaux de fils de fibres optiques (LB6.1E à LB6.5E, LB6.2A à LB6.5A), consistant de préférence de deux fibres par faisceau de fils de fibres optiques, étant respectivement guidés à partir d'ici, avec un guidage à quatre fibres, vers les abonnés (TN1 à TN5).

6. Manchon de câble selon la revendication 1,
**caractérisé en ce**
**qu'**une cassette est arrangée comme cassette d'entrée/de sortie (EAK7) et au moins une cassette d'épissure (SK) est arrangée, qu'un faisceau de fils de fibres optiques arrivant et un faisceau de fils de fibres optiques sortant (LBE7, LBA7), de préférence à dix fibres respectivement, sont guidés vers la cassette d'entrée/de sortie (EAK7) et, à partir d'ici, sont répartis sur des cassettes d'épissure (SK), qu'à partir des cassettes d'épissure (SK), avec un guidage à fibres multiples, des faisceaux de fils de fibres optiques, de préférence cinq faisceaux de fils de fibres optiques (LB7.1 à LB7.5) à quatre fibres respectivement, sont guidés vers les abonnés, de préférence cinq abonnés (TN1 à TN5).

7. Manchon de câble selon l'une quelconque des revendication précédentes,
**caractérisé en ce**
**que** les fibres et/ou faisceaux de fils de fibres sont guidés entre les cassettes individuelles dans des enveloppes protectrices flexibles ou des tubes protecteurs.

8. Manchon de câble selon l'une quelconque des revendications précédentes,
**caractérisé en ce**
**que** chaque cassette (1) peut être sortie du support de cassettes (9) individuellement ou en bloc.

9. Manchon de câble selon la revendication 8,
**caractérisé en ce**
**qu'**une connection d'enveloppes protectrices (29) est insérée dans la cassette (1).

10. Manchon de câble selon la revendication 9,
**caractérisé en ce**
**que** la connection d'enveloppes protectrices (29) bute contre un peigne (30), et que, en connection avec celui-ci, des rainures (31) sont arrangées dans le fond de la cassette (31) pour guider des fibres.

11. Manchon de câble selon l'une quelconque des revendications 8 à 10,
**caractérisé en ce**
**que** des dispositifs de suppression (7) pour fibres sont arrangées sur la cassette (1) et que les dispositifs de suppression (7) sont, aux bouts, courbés vers le bas.

12. Manchon de câble selon l'une quelconque des revendications 8 à 11,
**caractérisé en ce**
**que** les cassettes (1) peuvent être sorties du support de cassettes (9) en combinaison avec les listels d'encliquetage (12).

13. Manchon de câble selon l'une quelconque des revendications 8 à 12,
**caractérisé en ce**
**que** les cassettes (1) sont fixées de manière détachable par des chevilles d'arrêt (26) entre les listels d'encliquetage (12).

14. Manchon de câble selon l'une quelconque des revendications 8 à 13,
**caractérisé en ce**
**que** les cassettes (1) sont jointes de manière non-détachable par des chevilles d'arrêt (27).

15. Manchon de câble selon l'une quelconque des revendications 8 à 14,
**caractérisé en ce**
**que** la cassette (1) est pourvue d'un angle de fixation (28), s'étendant au-delà du listel d'encliquetage (12) et formant un dispositif de retenue pour la cassette (1) pendant que celle-ce est sortie.
